# EUROPEAN PATENT APPLICATION

(11) **EP 0 587 273 A1**
(43) Date of publication of application: **16.03.1994**
(21) Application number: 93304949.6
(22) Date of filing: 24.06.1993
(51) Int. Cl.: B60K 25/02, F16H 3/56

(54) **Dual ratio drives**

(30) Priority: 05.09.1992 GB 9218847
(71) Applicant: JAGUAR CARS LIMITED, Allesley Coventry CV5 9DR (GB)
(72) Inventor: Hennessy, Richard David, Lutterworth, Leicestershire LE17 4YR (GB)
(74) Representative: Watts, Peter Graham

(57) **Abstract**

A dual ratio drive (10) has a primary drive train with driven element (12), the driven element (12) being mounted on an output shaft (13) and connected to the output shaft (13) by a sprag clutch (14) for direct drive in one direction. The driven element (12) is also connected to the output shaft (13) by a second clutch (29) and an epicyclic gear mechanism (20), the epicyclic gear mechanism (20) being arranged to drive the output shaft (13) in said one direction at a drive ratio of greater than 1:1.

## Description

The present invention relates to dual ratio drives and in particular to a drive suitable for a motor vehicle alternator, in which the drive ratio is high at slow engine speeds and is reduced at higher engine speeds.

The alternator of a motor vehicle is conventionally driven from the crank shaft of the engine, by means of a belt drive. The maximum drive ratio for a belt drive is about 3:1, higher ratios than this resulting in unacceptable belt wear. As a consequence, the output from the alternator at lower engine speeds is limited.

According to one aspect of the present invention a dual ratio drive is characterised in that a primary drive train has a driven element, the driven element being mounted on an output shaft and connected to the output shaft by a sprag clutch for direct drive in one direction, the driven element also being connected to the output shaft by a second clutch means and an epicyclic gear mechanism, the epicyclic gear mechanism being arranged to drive the output shaft in said one direction at a drive ratio of greater than 1:1.

With the above mechanism, with the second clutch means disengaged, the driven element will drive the output shaft through the sprag clutch at a drive ratio of 1:1. With the second clutch means engaged, the driven element will drive the output shaft at a speed greater than 1:1, depending upon the gear ratio of the epicyclic gear mechanism, the sprag clutch permitting the output shaft to be driven at a speed faster than that of the driven element.

The present invention is particularly suitable for use with belt drives in which case the driven element will be a pulley. The invention may however also be applicable to other forms of drive train, for example chain or gear drives.

According to a preferred embodiment of the invention, the second clutch means is a centrifugal clutch which is adapted to disengage when the driven element reaches a predetermined speed, so that when the driven element is rotating at below the predetermined speed, the output shaft will be driven through the epicyclic gear mechanism at a ratio of greater than 1:1 and when the driven element is driven at speeds greater than the predetermined speed, the output shaft will be driven through the sprag clutch at a drive ratio of 1:1.

An embodiment of the invention is now described, by way of example only, with reference to the accompanying drawings in which:-
Figure 1 is a sectional side elevation of a drive mechanism in accordance with the present invention;
Figure 2 is a section along the line II-II of Figure 1; and
Figure 3 is a section along the line III-III of Figure 1.

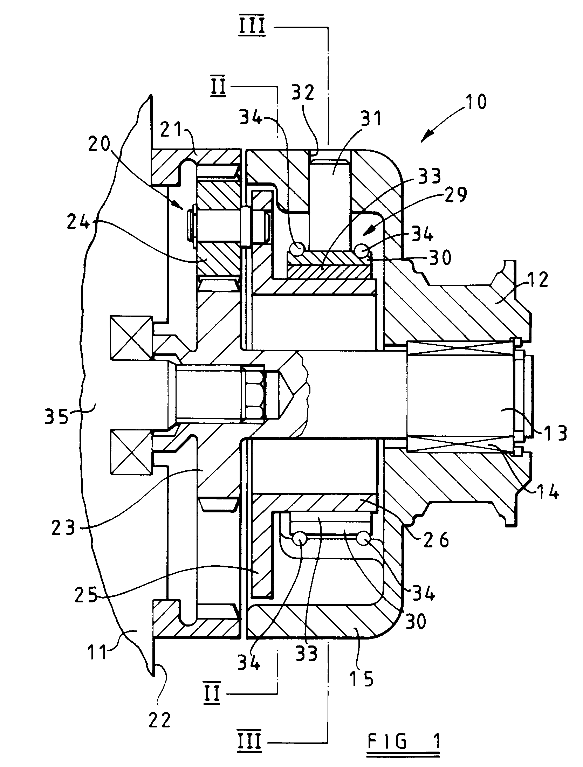

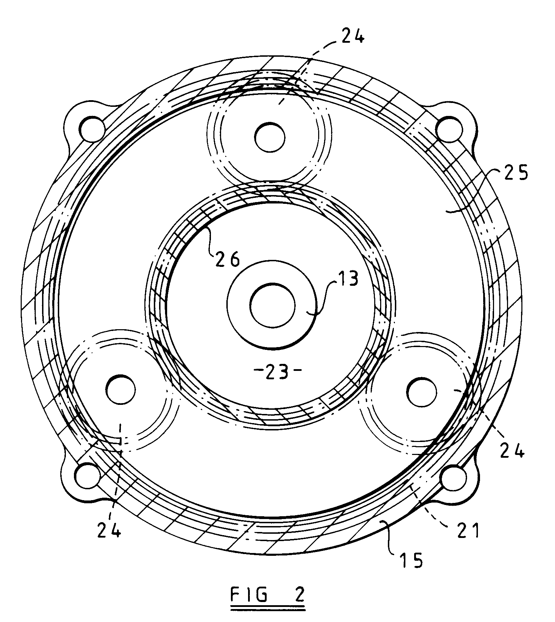

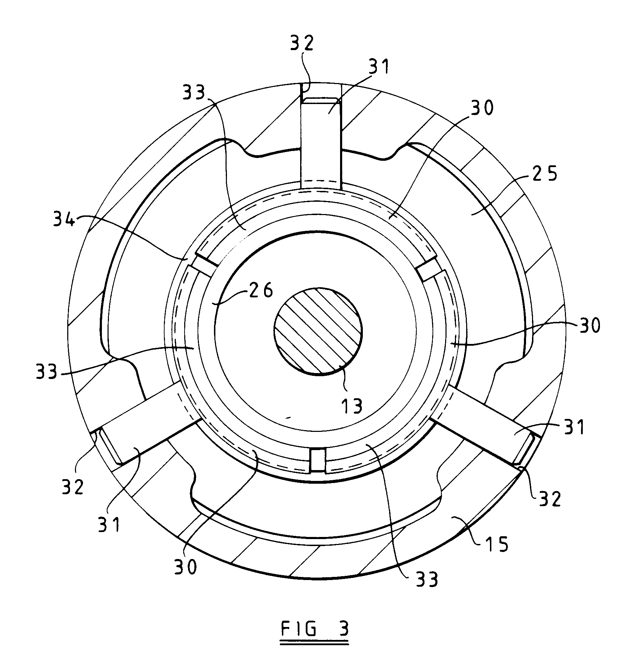

Figures 1 to 3 illustrate a dual ratio drive 10 for the alternator 11 of a motor vehicle.

The drive 10 includes a pulley 12 adapted to be driven by belt means from the crank shaft of an engine, at a drive ratio of 3:1. The pulley 12 is rotatably mounted on a drive shaft 13 and is drivingly connected thereto by means of a sprag clutch 14 of conventional construction. The sprag clutch 14, which comprises a series of angularly spaced ball or roller bearings located in camming depressions in the internal diameter of the pulley 12 or the opposed surface of the drive shaft 13, will transmit drive between the pulley 12 and drive shaft 13 in the normal driving direction of the pulley 12, but will permit the drive shaft 13 to rotate relative to the pulley 12 in the opposite direction.

The pulley 12 defines a bell housing 15 which is disposed concentrically of the drive shaft 13. An epicyclic gear mechanism 20 is disposed concentrically of the drive shaft 13 between the pulley 12 and the alternator 11. The annulus 21 of the epicyclic gear mechanism is secured to the end wall 22 of the alternator 11 and the sun gear 23 is secured to the drive shaft 13. The planet gears 24 of the epicyclic gear mechanism 20 are mounted on a carrier 25. The ratio of the annulus 21 to planet gears 24 to sun gear 23 is 100:25:50, giving an overall gear ratio between the pulley 12 and drive shaft 13 of 3:1.

The planet carrier 25 has a cylindrical section 26 which is disposed concentrically of the drive shaft 13 and extends between the drive shaft 13 and the wall of the bell housing 15. A centrifugal friction clutch mechanism 29 comprises three arcuate shoe members 30 which are disposed symmetrically about the cylindrical section 26 of the planet carrier 25. The arcuate shoe members 30 are mounted on radially extending spigots 31 which slidingly engage through apertures 32 in the bell housing 15. The radially inner surfaces of the shoe members 30 are provided with friction linings 33 and a pair of garter springs 34 bias the friction linings 33 into engagement with the external diameter of the cylindrical section 26 of planet carrier 25.

The drive shaft 13 is drivingly connected to the armature 35 of the alternator 11.

In operation, at lower speeds, the pulley 12 will drive the planet carrier 25 through the centrifugal friction clutch 29. This in turn will drive the drive shaft 13 through the epicyclic gear mechanism 20 at a drive ratio of 3:1, giving an overall drive ratio from the crank shaft of the engine of 9:1. The sprag clutch 14 permits the drive shaft 13 to rotate at a faster speed than the pulley 12.

When the speed of the pulley 12 increases to a predetermined limit of say 2000 to 2250 rpm, this limit being dictated by the strength of the springs 34, centrifugal force will overcome the load applied by the springs 34 so that the frictional linings 33 of shoe members 30 move out of engagement with the cylindrical section 26 of planet carrier 25, disengaging the friction clutch 29. Drive from the pulley 12 will then be transmitted directly to the drive shaft 13 through the sprag clutch 14, giving an overall drive ratio from the crank shaft of the engine of 3:1.

Various modifications may be made without departing from the present invention for example while in the above embodiment drive to the epicyclic gear mechanism is controlled by a centrifugal clutch, other forms of clutch, for example electromechanically controlled clutches may be used. Also while particularly suitable for alternator drives, the dual ratio drive may also be used for driving other ancillary equipment, for example power steering pumps and air conditoning compressors, where improved output is required at low engine speeds. While this invention is particularly suitable for use with belt drives it may be applied to other forms of drive train.

## Claims

1. A dual ratio drive (10) characterised in that a primary drive train has a driven element (12), the driven element (12) being mounted on an output shaft (13) and connected to the output shaft (13) by a sprag clutch (14) for direct drive in one direction, the driven element (12) also being connected to the output shaft (13) by a second clutch means (29) and an epicyclic gear mechanism (20), the epicyclic gear mechanism (20) being arranged to drive the output shaft (13) in said one direction at a drive ratio of greater than 1:1.

2. A dual ratio drive (10) according to Claim 1 characterised in that the driven element (12) is connected by the second clutch means (29) to the planet carrier (25) of the epicyclic gear mechanism (20), the annulus (21) being fixed and the sun gear (23) being mounted on the output shaft (13).

3. A dual ratio drive (10) according to Claim 1 or 2 characterised in that the drive ratio of the epicyclic gear mechanism (20) is of the order of 3:1.

4. A dual ratio drive (10) according to any one of the preceding claims characterised in that the second clutch means (29) is a centrifugal clutch means, adapted to disengage when the speed of the driven element (12) reaches a predetermined magnitude.

5. A dual ratio drive (10) according to Claim 4 characterised in that the driven element (12) defines a bell housing (15) which extends parallel to the output shaft (13), the planet carrier (25) of the epicyclic gear mechanism (20) has a cylindrical formation (26) which extends coaxially of the output shaft (13) between the output shaft (13) and the bell housing (15), a plurality of arcuate shoes (30) are mounted on the bell housing (15) for movement radially thereof, the shoes (30) being biased into engagement with the cylindrical portion (26) of the planet carrier (25), the biasing means (34) being opposed by the centrifugal force acting upon the arcuate shoes (30) so that they disengage from the cylindrical formation (26) of the planet carrier (25), when the driven element (12) reaches a predetermined speed.

6. A dual ratio drive (10) according to Claim 5 characterised in that the shoes (30) are mounted on the bell housing (15) by means of radially extending spigots (31) which slidingly engage in apertures (32) in the bell housing (15).

7. A dual ratio drive (10) according to Claim 5 or 6 characterised in that the arcuate shoes (30) are biased into engagement with the cylindrical formation (26) of the planet carrier (25) by means of a pair of circumferentially extending garter springs (34).

8. A dual ratio drive (10) according to any one of the preceding claims characterised in that the driven element (12) is a pulley adapted to be driven by belt means from a crank shaft of an engine, the drive ratio between the crank shaft and the pulley (12) being of the order of 3:1.

9. An alternator drive for a motor vehicle characterised in that a drive element (12) of a dual ratio drive (10) as claimed in any one of Claims 1 to 9, is drivingly connected to a crank shaft of an engine, the annulus (21) of the epicyclic mechanism (20) being secured to the end wall of the alternator housing (22) and the output shaft (13) being drivingly connected to the armature of the alternator (11).
